# EUROPÄISCHE PATENTSCHRIFT

(11) **EP 2 394 835 B1**
(45) Veröffentlichungstag und Bekanntmachung des Hinweises auf die Patenterteilung: **17.07.2013**
(21) Anmeldenummer: 11004756.0
(22) Anmeldetag: 10.06.2011
(51) Int. Cl.: B60K 6/12, B60K 17/10, B60K 5/08, B62D 59/04

(54) **Antriebseinheit für ein modulares, selbstangetriebenes Schwerlastfahrzeug**
Drive unit for a modular, self-propelled heavy duty vehicle
Unité d'entraînement pour véhicule gros porteur autopropulsé modulaire

(30) Priorität: 10.06.2010 DE 102010023307; 10.06.2010 DE 202010007823 U
(43) Veröffentlichungstag der Anmeldung: 14.12.2011
(73) Patentinhaber: Scheuerle Fahrzeugfabrik GmbH, 74629 Pfedelbach (DE)
(72) Erfinder: Riek, Thomas, 74629 Pfedelbach (DE)
(74) Vertreter: Leitner, Waldemar

(56) Entgegenhaltungen:
- WO-A1-00/27662
- WO-A1-91/01899
- DE-A1- 3 143 723
- DE-A1-102005 048 455
- US-A- 5 887 674

## Beschreibung

Die Erfindung betrifft eine Antriebseinheit für ein modulares, selbstangetriebenes Schwerlastfahrzeug, welche ein in einem Gehäuse der Antriebseinheit aufgenommenes Antriebsaggregat aufweist, das über mindestens eine Druckleitung mit dem Schwerlastfahrzeug verbindbar ist, wobei die Antriebseinheit nebengeordnet zu und unabhängig vom vorgenannten Antriebsaggregat mindestens ein weiteres in dem Gehäuse der Antriebseinheit aufgenommenes Antriebsaggregat aufweist, wobei die Antriebsaggregate jeweils einen Motor und eine von diesem Motor angetriebene Pumpe besitzen.

Derartige Antriebseinheiten sowie ein modulares, selbstangetriebenes Schwerlastfahrzeug sind aus der DE 10 2005 048 455 bekannt. Modulare, selbstangetriebene Schwerlastfahrzeuge werden dadurch ausgebildet, dass mehrere Fahrzeugmodule nebeneinander und/oder hintereinander angeordnet werden, so dass durch eine mechanische Verbindung der einzelnen Fahrzeugmodule ein Fahrzeug-Verband ausgebildet wird, wobei die ebenen Plattformen der einzelnen Fahrzeugmodule eine ebene Ptattform des modular aufgebauten Schwerlastfahrzeugs ausbilden. Da die einzelnen Fahrzeugmodule nicht mit einer Antriebseinheit ausgestattet sind, ist es erforderlich, an das derart gebildete modulare Schwerlastfahrzeug eine oder mehrere Antriebseinheiten anzukoppeln, um die einzelnen Fahrzeugmodule antreiben zu können. Die Antriebseinheit des bekannten Schwerlastfahrzeugs weist hierzu ein erstes Antriebsaggregat und, nebengeordnet zu und unabhängig vom vorgenannten Antriebsaggregat, ein zweites Antriebsaggregat auf, die jeweils einen Motor und einen von diesem Motor angetriebene Pumpe besitzen und über Druckleitungen mit in den Achsen von Radsätzen des Schwerlastfahrzeugs angeordneten Hydromotoren verbunden sind.

Ein Nachteil der bekannten Antriebseinheiten für ein modulares, selbstangetriebenes Schwerlastfahrzeug besteht darin, dass die Antriebsaggregate oft in einem ungünstigen Teillastbetrieb betrieben werden, da beim Zusammenkuppeln der Fahrzeugmodule zum Schwerlastfahrzeug, beim Unterfahren der Ladung und bei der Positionierung der Ladung nur ein Bruchteil der Leistung abgefragt wird, die beim Transport der vom Schwerlastfahrzeug aufgenommenen Ladung zum Lagerort erforderlich ist. Dieser Teillastbetrieb bringt in dieser Art und Weise nicht nur eine Verkürzung der Lebensdauer der Antriebseinheit und insbesondere des Antriebsaggregats, sondern auch einen unnötig hohen Kraftstoffverbrauch sowie eine damit einhergehende Lärmbelastung mit sich. Fällt das Antriebsaggregat der bekannten Antriebseinheit aus, so ist des weiteren ein Notbetrieb des bekannten Schwerlastfahrzeugs nicht möglich, wie er z. B. bei zeitkritischen Vorgängen erforderlich ist.

Es ist nun Aufgabe der vorliegenden Erfindung, eine Antriebseinheit für ein modulares, selbstangetriebenes Schwerlastfahrzeug auszubilden, welches sich durch einen effizienteren Betrieb auszeichnet.

Diese Aufgabe wird erfindungsgemäß dadurch gelöst, dass mindestens ein Druckausgang der Antriebseinheit über eine Druckleitung mit den druckseitigen Ausgängen der Pumpen mindestens zweier Antriebsaggregate verbunden ist.

Durch die erfindungsgemäßen Maßnahmen wird in vorteilhafter Art und Weise eine Antriebseinheit für ein modulares, selbstangetnebenes Fahrzeug geschaffen, welche sich dadurch auszeichnet, dass in Folge der mindestens zwei Antriebsaggregate ein redundantes System ausgebildet wird, bei dem beim Ausfall eines Antriebsaggregats zumindest ein eingeschränkter Betrieb durch das zweite Antriebsaggregat der erfindungsgemäßen Antriebseinheit durchgeführt werden kann. Dies ist insbesondere bei einem als Hafentransportfahrzeug eingesetzten modularen, selbstangetriebenen Schwerlastfahrzeug von Vorteil, da hierdurch bei zeitkritischen Vorgängen, z. B. beim Entladen einer Barge in einem Gezeitengewässer, der Entladevorgang noch zu Ende gebracht werden kann, bevor einsetzende Ebbe oder Flut ein weiteres Entladen unmöglich machen.

Ein weiterer Vorteil der Erfindung besteht darin, dass bei einer Vielzahl von Betriebssituationen, wie z. B. beim Zusammenstellen der einzelnen Fahrzeugmodule zu dem modularen Schwerlastfahrzeug oder beim Positionieren desselben, eine deutlich geringere Leistung erforderlich ist als beim Transport einer schweren Last durch dieses Schwerlastfahrzeug. Indem nun mindestens zwei unabhängige Antriebsaggregate vorgesehen sind, kann die erfindungsgemäße Antriebseinheit bei derartigen Leistungsanforderungen nur mit einem einzigen Antriebsaggregat betrieben werden. Dies führt in vorteilhafter Art und Weise zu einer Kraftstoffeinsparung und somit zu einer verminderten Umweltbelastung. Ein weiterer Vorteil ist, dass während dieser Betriebsphasen, bei denen nur eine geringe Leistung erforderlich ist, durch den Einsatz nur eines einzigen Antriebsaggregats eine Geräuschreduzierung erzielt werden kann und in vorteilhafter Art und Weise vermieden wird, dass das Antriebsaggregat in einem motorschädlichen Teillastbetrieb betrieben wird.

Vorteilhafte Weiterbildungen der Erfindung sind Gegenstand der Unteransprüche.

Weitere Einzelheiten und Vorteile sind den Ausführungsbeispielen zu entnehmen, die im folgenden anhand der Figuren beschrieben werden. Es zeigen:
- Figur 1:: eine Seitenansicht eines modularen, selbstangetriebenen Fahrzeugs zusammen mit einem ersten Ausführungsbeispiel einer Antriebseinheit,
- Figur 2:: eine teilweise in Schnitt gehaltene Draufsicht auf das Ausführungsbeispiel der Figur 1,
- Figur 3:: eine vergrößerte Darstellung einer der Antriebseinheiten der Figur 2,
- Figur 4:: eine Seitenansicht der Antriebseinheit der Figur 3, und
- Figur 5:: eine schematische Darstellung eines zweiten Ausführungsbeispiels einer Antriebseinheit.

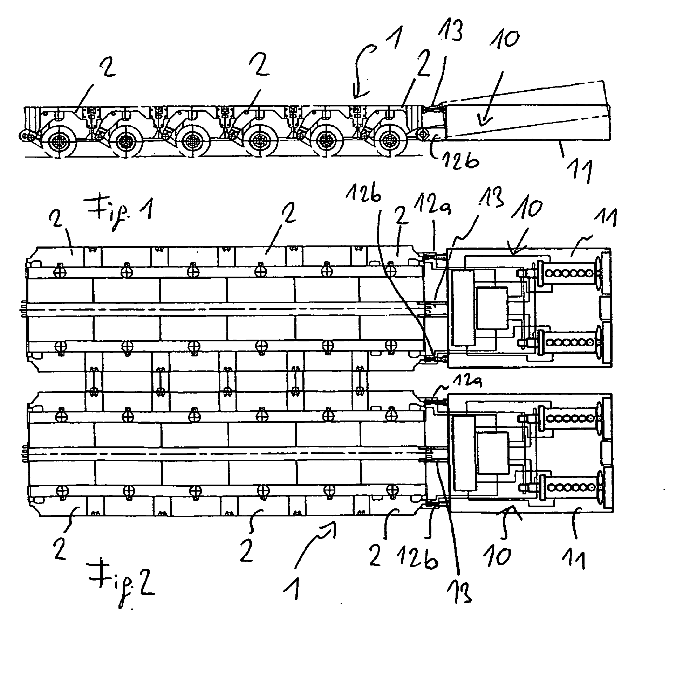

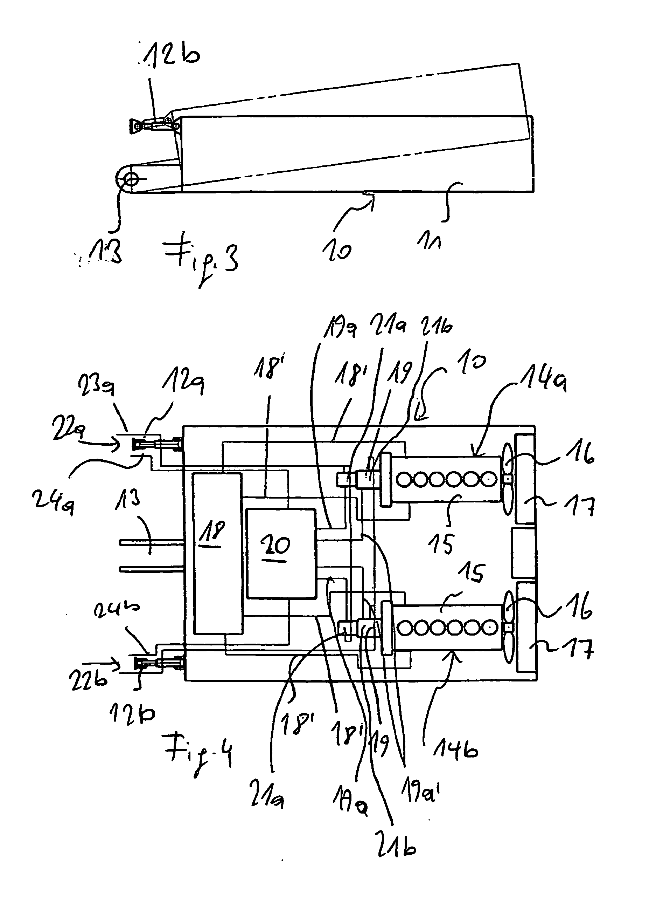

In den Figuren 1 und 2 ist ein allgemein mit 1 bezeichnetes modulares, selbstangetriebenes Schwerlastfahrzeug dargestellt, welches sich in bekannter Art und Weise aus mehreren Fahrzeugmodulen 2 zusammensetzt. Im hier gezeigten Fall besteht das Schwerlastfahrzeug 1 aus zwei Reihen von Fahrzeugmodulen 2, wobei jede Reihe wiederum - wie am besten aus Figur 2 ersichtlich ist - aus mehreren einzelnen Fahrzeugmodulen 2 zusammengesetzt ist. An den in den Figuren 1 und 2 jeweils rechten Fahrzeugmodul der beiden Reihen ist jeweils eine allgemein mit 10 bezeichnete Antriebseinheit angekoppelt, indem - wie am besten aus der Darstellung der Figuren 3 und 4 ersichtlich ist - jedes Gehäuse 11 der beiden Antriebseinheiten 10 jeweils einen Gelenkarm 13 aufweist, mit dem die Antriebseinheiten 10 schwenkbar am zugeordneten Fahrzeugmodul 2 angelenkt sind. Zylinder 12a, 12b verbinden das Gehäuse 11 der Antriebseinheiten 10 mit dem Fahrzeugmodul 2, so dass - wie in den Figuren 1 und 3 gezeigt - die Antriebseinheiten 10 verschwenkbar sind.

Jede der beiden Antriebseinheiten 10 besitzt zwei nebeneinander angeordnete, unabhängige Antriebsaggregate 14a und 14b, die jeweils einen Verbrennungsmotor 15, insbesondere einen Dieselmotor, aufweisen. Diese werden jeweils von einem Motorkühler 16 gekühlt, wobei die Kühlluft durch Auslassöffnungen 17 aus dem Gehäuse 11 abgeführt wird. Jeder der beiden Verbrennungsmotoren 15 wird von einem Tank 18 über einen Kraftstoffkreislauf 18' mit Kraftstoff versorgt. Jeder Verbrennungsmotor 15 treibt eine Hydraulikpumpe 19 an. Saugleitungen 19a, 19a' verbinden die Saugseiten der Hydraulikpumpen 19 mit einem Tank 20.

Im hier gezeigten Ausführungsbeispiel weisen die beiden Hydraulikpumpen 19 der beiden Antriebsaggregate 14a, 14b der Antriebseinheit 10 jeweils zwei Pumpeneinheiten 21a, 21 b auf, wobei die beiden Saugleitungen 19a jeweils den Tank 20 mit der ersten Pumpeneinheit 21 a verbinden und die Saugleitungen 19a' zu den zweiten Pumpeneinheiten 21 b der Antriebseinheiten 10 führen. Durch diese Maßnahme wird erreicht, dass bei den Antriebseinheiten 10 jeweils zwei unabhängige Druckausgänge 22a, 22b vorhanden sind, wobei die erste Pumpeneinheiten 21a wie nachstehend beschrieben den ersten Druckausgang 22a mit Druck und die zweite Pumpeneinheiten 21 b den zweiten Druckausgang 22b mit Druck versorgen. Hierzu ist vorgesehen, dass eine dem ersten Druckausgang 22a zugeordnete Druckleitung 23a mit dem druckseitigen Ausgang der ersten Pumpeneinheit 21a des ersten Antriebsaggregats 14a verbunden ist, so dass das von der ersten Pumpeneinheit 21 a des Antriebsaggregats 14a druckbeaufschlagtes Hydraulikmedium über die erste Druckleitung 23a zu dem Druckausgang 22a und weiter zu einem entsprechenden Anschluss des an die Antriebseinheit 10 gekoppelten Fahrzeugmoduls 2 geleitet und von dort zu den weiteren Fahrzeugmodulen 2 des Schwerlastfahrzeugs 1 verteilt wird. In entsprechender Art und Weise ist die dem zweiten Druckausgang 22b zugeordnete zweite Druckleitung 23b mit dem druckseitigen Ausgang der zweiten Pumpeneinheit 21 b des zweiten Antriebsaggregats 14b der Antriebseinheit 10 verbunden. Bei dem beschriebenen Schwerlastfahrzeug 1 wird der erste Druckausgang 22a zum Lenkantrieb der Fahrzeugmodule 2 des Schwerlastfahrzeugs 1 und der zweite Druckausgang 22b zum Fahrantrieb desselben verwendet. Diese Aufteilung ist aber nicht zwingend.

Um nun ein redundantes System auszubilden, ist vorzugsweise vorgesehen, dass die erste Druckleitung 23a nicht nur mit dem druckseitigen Ausgang der ersten Pumpeneinheit 21 a des ersten Antriebsaggregats 14a, sondern des weiteren noch mit dem druckseitigen Ausgang der ersten Pumpeneinheit 21a des zweiten Antriebsaggregats 14b verbunden ist. In entsprechender Art und Weise ist die zweite Druckleitung 23b mit dem druckseitigen Ausgang der zweiten Pumpeneinheit 21 b des zweiten Antriebsaggregats 14b und demjenigen des ersten Antriebsaggregats 14a verbunden. Eine derartige Ausbildung ermöglicht in vorteilhafter Art und Weise, dass ein Fahrbetrieb bzw. ein Lenkbetrieb des Schwerlastfahrzeugs 1 auch noch dann ermöglicht wird, wenn eines der beiden Antriebsaggregate 14a oder 14b ausfällt. Außerdem kann - wenn nur eine geringe Antriebsleistung benötigt wird - eines der beiden Antriebsaggregate 14a bzw. 14b abgeschaltet werden und die erforderliche, verringerte Antriebsleistung wird dann allein von dem anderen Antriebsaggregat 14b bzw. 14a bereitgestellt.

Die Antriebseinheit 10 weist des weiteren noch Rückflussleitungen 24a, 24b auf, die in den Tank 20 münden.

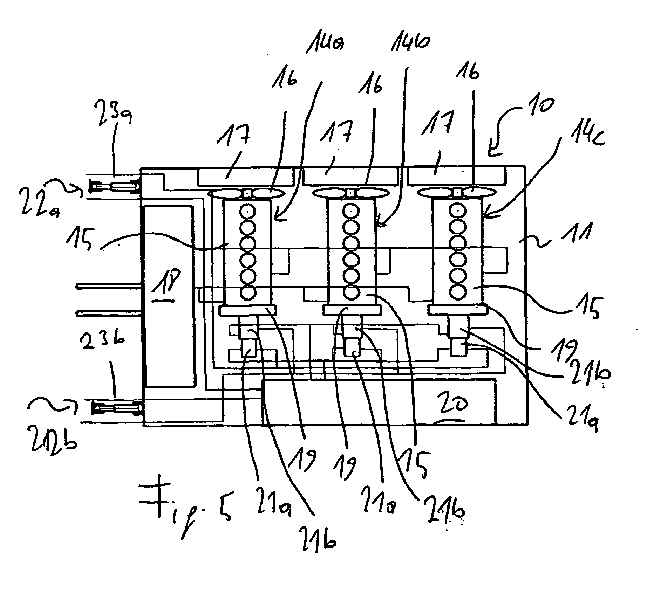

In der Figur 5 ist nun ein zweites Ausführungsbeispiel einer Antriebseinheit 10 dargestellt, wobei einander entsprechende Bauteile mit den gleichen Bezugszeichen wie beim ersten Ausführungsbeispiel versehen und nicht mehr näher beschrieben werden. Der wesentliche Unterschied zwischen den beiden Ausführungsbeispielen besteht nun darin, dass die in Figur 5 gezeigte Antriebseinheit 10 drei nebeneinander angeordnete Antriebsaggregate 14a-14c aufweist, wobei jedes der beiden Antriebsaggregate 14a-14c einen Verbrennungsmotor 15 sowie eine Hydraulikpumpe 19 besitzt. Die Druckleitung 23a des ersten Druckausgangs 22 ist hierbei mit den druckseitigen Ausgängen der ersten Pumpeneinheiten 21 a der drei Antriebsaggregate 14a-14c und die dem zweiten Druckausgang 22b zugeordnete zweite Druckleitung 23b mit den druckseitigen Ausgängen der zweiten Pumpeneinheiten 21 a der drei vorgenannten Antriebsaggregate 14a-14c verbunden. Hierdurch wird eine nochmals verbesserte Redundanz ausgebildet sowie erreicht, dass - je nach Leistungsbedarf des Schwerlastfahrzeugs 1 - die jeweils benötigte Leistung durch den Einsatz von einem, von zwei oder von drei Antriebsaggregaten 14a-14c erzeugt werden kann.

Zusammenfassend ist festzuhalten, dass durch die beschriebenen Maßnahmen eine Antriebseinheit 10 für ein modulares, selbstfahrendes Schwerlastfahrzeug 1 ausgebildet wird, welches sich durch eine redundante Auslegung auszeichnet und bei dem ein kraftstoffverbrauchender und umweltbelastender Teillastbetrieb weitgehend vermieden werden kann.

## Patentansprüche

1. Antriebseinheit für ein modulares, selbstangetriebenes Schwerlastfahrzeug (1), welche ein in einem Gehäuse (11) der Antriebseinheit (10) aufgenommenes Antriebsaggregat (14a) aufweist, das über mindestens eine Druckleitung (23a, 23b) mit dem Schwerlastfahrzeug (1) verbindbar ist, wobei die Antriebseinheit (10) nebengeordnet zu und unabhängig vom vorgenannten Antriebsaggregat (14a) mindestens ein weiteres in dem Gehäuse (11) der Antriebseinheit (10) aufgenommenes Antriebsaggregat (14b; 14b-14c) aufweist, wobei die Antriebsaggregate (14a, 14b) jeweils einen Motor (15) und eine von diesem Motor (15) angetriebene Pumpe (19) besitzen, **dadurch gekennzeichnet, dass** mindestens ein Druckausgang (22a; 22b) der Antriebseinheit (10) über mindestens eine Druckleitung (23a; 23b) mit den druckseitigen Ausgängen der Pumpen (19) mindestens zweier Antriebsaggregate (14a, 14b; 14a-14c) verbunden ist.

2. Antriebseinheit nach Anspruch 1, **dadurch gekennzeichnet, dass** mindestens eine Pumpe (19) mindestens eine erste Pumpeneinheit (21a) und eine zweite Pumpeneinheit (21b) aufweist.

3. Antriebseinheit nach Anspruch 2, **dadurch gekennzeichnet dass** eine Druckleitung (23a) mit den druckseitigen Ausgängen der ersten Pumpeneinheiten (21a) mindestens zweier Antriebsaggregate (14a, 14b; 14a-14c) verbunden ist.

4. Antriebseinheit nach einem der vorangehenden Ansprüche, **dadurch gekennzeichnet, dass** eine weitere Druckleitung (23b) mit den druckseitigen Ausgängen der zweiten Pumpeneinheiten (21 b) mindestens zweier Antriebsaggregate (14a, 14b; 14a-14c) verbunden ist.

5. Antriebseinheit nach einem der vorangehenden Ansprüche, **dadurch gekennzeichnet, dass** die Antriebseinheit (10) mindestens drei Antriebsaggregate (14a-14c) aufweist, die jeweils einen Motor (15) und eine von diesem Motor (15) angetriebene Pumpe (19) besitzen.

6. Antriebseinheit nach Anspruch 5, **dadurch gekennzeichnet, dass** jedes Antriebsaggregat (14a-14c) mindestens eine Pumpe (19) mit mindestens einer ersten Pumpeneinheit (21a) und einer zweiten Pumpeneinheit (21b) aufweist.

7. Antriebseinheit nach einem der Ansprüche 5 oder 6, **dadurch gekennzeichnet, dass** die erste Druckleitung (23a) mit den druckseitigen Ausgängen der ersten Pumpeneinheiten (21a) der drei Antriebsaggregate (14a-14c) und die weitere Druckleitung (23b) mit den druckseitigen Ausgängen der zweiten Pumpeneinheiten (21 b) der drei Antriebsaggregate (14a-14c) verbunden ist.

## Claims

1. Drive unit for a modular self-propelled heavy-duty vehicle (1), comprising a drive assembly (14a) received in a housing (11) of the drive unit (10) being connectable via at least one pressure line (23a, 23b) to the heavy-duty vehicle (1), wherein the drive unit (10) is arranged next to and independently of the aforementioned drive assembly (14a) and comprises at least one further drive assembly (14b; 14b-14c) received in the housing (11) of the drive unit (10), wherein each of the drive assemblies (14a, 14b) has an engine (15) and a pump (19) driven by said engine (15),
**characterized in that**
at least one pressure outlet (22a; 22b) of the drive unit (10) is connected via at least one pressure line (23a; 23b) to the pressure-side outlets of the pumps (19) of at least two drive assemblies (14a, 14b; 14a-14c).

2. Drive unit according to claim 1, **characterized in that** at least one pump (19) comprises at least one first pump unit (21 a) and a second pump unit (21 b).

3. Drive unit according to claim 2, **characterized in that** a pressure line (23a) is connected to the pressure-side outlets of the first pump units (21a) of at least two drive assemblies (14a, 14b; 14a-14c).

4. Drive unit according to one of the preceding claims, **characterized in that** a further pressure line (23b) is connected to the pressure-side outlets of the second pump units (21b) of at least two drive assemblies (14a, 14b; 14a-14c).

5. Drive unit according to one of the preceding claims, **characterized in that** the drive unit (10) comprises at least three drive assemblies (14a-14c), each having an engine (15) and a pump (19) driven by said engine (15).

6. Drive unit according to claim 5, **characterized in that** each drive assembly (14a-14c) comprises at least one pump (19) having at least a first pump unit (21 a) and a second pump unit (21b).

7. Drive unit according to one of the claims 5 or 6, **characterized in that** the first pressure line (23a) is connected to the pressure-side outlets of the first pump units (21 a) of the three drive assemblies (14a-14c) and the further pressure line (23b) is connected to the pressure-side outlets of the second pump units (21b) of the three drive assemblies (14a-14c).

## Revendications

1. Unité d'entraînement pour un véhicule gros porteur autopropulsé modulaire (1), lequel présente un groupe motopropulseur (14a) logé dans un carter (11) de l'unité d'entraînement (10) et pouvant être relié par l'intermédiaire au moins d'une conduite de pression (23a, 23b) au véhicule gros porteur (1), sachant que l'unité d'entraînement (10) présente à proximité de et indépendamment dudit groupe motopropulseur (14a) mentionné ci-avant au moins un autre groupe motopropulseur (14b ; 14b-14c) logé dans le carter (11) de l'unité d'entraînement (10), sachant que les groupes motopropulseurs (14a, 14b) comprennent respectivement un moteur (15) et une pompe (19) entraînée par ledit moteur (15), **caractérisée en ce qu'**au moins une sortie de pression (22a ; 22b) de l'unité d'entraînement (10) est reliée par l'intermédiaire au moins d'une conduite de pression (23a ; 23b) aux sorties côté pression des pompes (19) d'au moins deux groupes motopropulseurs (14a, 14b ;14a-14c).

2. Unité d'entraînement selon la revendication 1, **caractérisée en ce qu'**au moins une pompe (19) présente au moins une première unité de pompe (21a) et une deuxième unité de pompe (21b).

3. Unité d'entraînement selon la revendication 2, **caractérisée en ce qu'**une conduite de pression (23a) est reliée aux sorties côté pression des premières unités de pompe (21a) d'au moins deux groupes motopropulseurs (14a, 14b ; 14a-14c).

4. Unité d'entraînement selon l'une quelconque des revendications précédentes, **caractérisée en ce qu'**une autre conduite de pression (23b) est reliée aux sorties côté pression des deux unités de pompe (21b) d'au moins deux groupes motopropulseurs (14a, 14b ; 14a-14c).

5. Unité d'entraînement selon l'une quelconque des revendications précédentes, **caractérisée en ce que** l'unité d'entraînement (10) présente au moins trois groupes motopropulseurs (14a-14c), lesquels comprennent respectivement un moteur (15) et une pompe (19) entraînée par ledit moteur (15).

6. Unité d'entraînement selon la revendication 5, **caractérisée en ce que** chaque groupe motopropulseur (14a-14c) présente au moins une pompe (19) dotée au moins d'une première unité de pompe (21a) et d'une deuxième unité de pompe (21b).

7. Unité d'entraînement selon l'une quelconque des revendications 5 ou 6, **caractérisée en ce que** la première conduite de pression (23a) est reliée aux sorties côté pression des premières unités de pompe (21a) des trois groupes motopropulseurs (14a-14c), **en ce que** l'autre conduite de pression (23b) est reliée aux sorties côté pression des deux unités de pompe (21b) des trois groupes motopropulseurs (14a-14c).
